# EUROPÄISCHE PATENTSCHRIFT

(11) **EP 2 678 577 B1**
(45) Veröffentlichungstag und Bekanntmachung des Hinweises auf die Patenterteilung: **25.07.2018**
(21) Anmeldenummer: 12743650.9
(22) Anmeldetag: 16.02.2012
(51) Int. Cl.: F16D 13/64

(54) **TROCKENE DOPPELKUPPLUNG ODER TROCKENE REIBUNGSKUPPLUNG**
DRY DUAL CLUTCH OR DRY FRICTION CLUTCH
DOUBLE EMBRAYAGE À SEC OU EMBRAYAGE À SEC

(30) Priorität: 25.02.2011 DE 102011012478
(43) Veröffentlichungstag der Anmeldung: 01.01.2014
(73) Patentinhaber: Schaeffler Technologies AG & Co. KG, 91074 Herzogenaurach (DE)
(72) Erfinder: KIMMIG, Karl-Ludwig, 77883 Ottenhöfen (DE)
(86) Internationale Anmeldenummer: PCT/DE2012/000138
(87) Internationale Veröffentlichungsnummer: WO 2012/116671

(56) Entgegenhaltungen:
- EP-A1- 1 413 792
- DE-A1- 19 712 203
- FR-A1- 2 758 374
- US-A- 4 202 432
- US-A- 4 305 494
- US-A- 4 615 427
- US-A- 4 951 793

## Beschreibung

Die vorliegende Erfindung betrifft die Ausgestaltung der Kupplungsscheiben für eine trockene Kupplung, vorzugsweise eine trockene Doppelkupplung.

Es ist bekannt, Kupplungsscheiben für trockene (Doppel-)Kupplungen zu verwenden, bei denen auf beiden Seiten (Reibseiten) der Kupplungsscheibe(n) gleiche Reibbeläge, beispielsweise entweder LuK B8080 als gewickelter Belag oder LuK RCF1 als massegepresster Belag, angeordnet sind.

Verschiedene Beläge weisen für sich genommen unterschiedliche tribologische Eigenschaften wie Reibwerthöhe, Komfortverhalten (Rupfen), Belagverschleiß bei Energieeintrag, Einlaufverhalten usw. auf, welche im Gesamtsystem / Fahrzeug unterschiedliche Fahreigenschaften bewirken.

Aus der US 4,305,494 ist eine Reibungskupplung bekannt, die eine Kupplungsscheibe aufweist, die im nicht betätigten Zustand schräg in Bezug auf die Reibflächen der Anspressplatte und Gegendruckplatte der Kupplung verläuft. Hierdurch sind die jeweiligen Endstücke der Reibbeläge besonderen, bei herkömmlichen Reibkupplungen nicht zu erwartenden Belastungen ausgesetzt, wofür hier eine entsprechende Härtung dieser jeweiligen Regionen vorgesehen ist.

Aus der EP 1 413 792 A1 ist weiterhin eine Doppelkupplung bekannt, wobei die beiden Reibbeläge zumindest einer der beiden Kupplungsscheiben unterschiedliche Belagsqualitäten aufweisen. Es ist die Aufgabe der Erfindung, die Funktion von (trockenen) Kupplungen / Doppelkupplungen bezüglich zumindest einer der folgenden Eigenschaften: Momentenkapazität, Komfortverhalten (Rupfen), Einlaufverhalten, Verschleiß, und/oder Dauerhaltbarkeit zu verbessern bzw. zu optimieren.

Die Aufgabe wird gelöst durch eine trockene Doppelkupplung gemäß den Merkmalen von Anspruch 1.

Die trockene Doppelkupplung umfasst eine erste Reibungskupplung und eine zweiten Reibungskupplung, wobei die Reibungskupplungen mit jeweils einer Getriebeeingangswelle verbindbar sind, um Antriebsmoment von zumindest einem Antrieb an die jeweilige Getriebeeingangswelle zu übertragen, wobei die Reibungskupplungen jeweils zumindest eine Kupplungsscheibe mit zumindest zwei Reibbelägen aufweisen, die jeweils auf unterschiedlichen Seiten eines Trägerelementes angeordnet sind, dadurch gekennzeichnet, dass die beiden Reibbeläge zumindest einer der Kupplungsscheiben unterschiedliche Belagsqualitäten aufweisen.

Offenbart ist weiter eine trockene Reibungskupplung, die mit einer Getriebeeingangswelle verbindbar ist, um Antriebsmoment von zumindest einem Antrieb an die Getriebeeingangswelle zu übertragen, wobei die Reibungskupplung zumindest eine Kupplungsscheibe mit zumindest zwei Reibbelägen aufweist, welche jeweils auf unterschiedlichen Seiten eines Trägerelementes angeordnet sind, dadurch gekennzeichnet, dass die beiden Reibbeläge dieser Kupplungsscheibe unterschiedliche Belagsqualitäten aufweisen.

Die Reibbeläge können jeweils für sich genommen aus einem zusammenhängenden Reibbelag oder aus einzelnen Segmenten bestehen, die in Summe einen Reibbelag im Sinne der vorliegenden Erfindung bilden.

Offenbart ist ebenfalls eine trockene Reibungskupplung, die mit einer Getriebeeingangswelle verbindbar ist, um Antriebsmoment von zumindest einem Antrieb an die Getriebeeingangswelle zu übertragen, wobei die Reibungskupplung zumindest eine Kupplungsscheibe mit zumindest zwei Reibbelägen aufweist, welche jeweils auf unterschiedlichen Seiten eines Trägerelementes angeordnet sind, wobei zumindest der Reibbelag auf einer der beiden Seiten des Trägerelementes aus einzelnen Segmenten aufgebaut ist, welche untereinander unterschiedliche Belagsqualitäten aufweisen.

Dabei können die Reibbeläge auf beiden Seiten des Trägerelementes der Kupplungsscheibe aus einzelnen Segmenten aufgebaut sein, welche jeweils für sich genommen untereinander unterschiedliche Belagsqualitäten aufweisen.

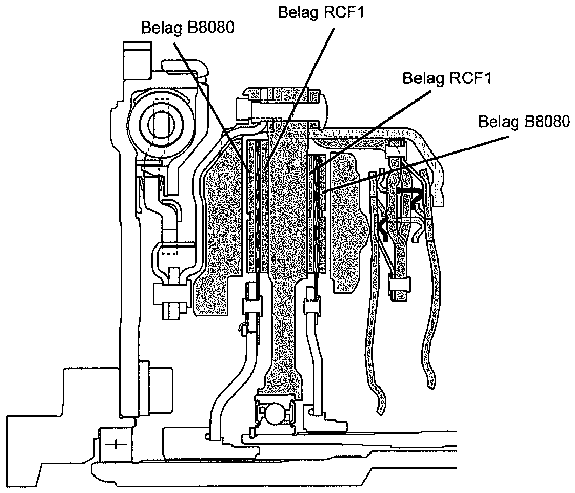

Ein Nutzen der vorliegenden Erfindung liegt darin, dass der massegepresste Belag bei Überdrehzahl in kleine Stücke zerfällt und dadurch eine Art Sollbruchstelle ohne kritische Blockier-Drehmomente bildet. Die Erfindung ist im Folgenden anhand bevorzugter Ausführungsbeispiele in Verbindung mit der beigefügten Figur näher erläutert.

Die Erfindung offenbart also unter anderem die Auswahl von Kupplungsscheiben mit jeweils zumindest zwei Reibbelägen mit unterschiedlichen Belagsqualitäten. Unter "unterschiedlicher Belagsqualität" ist im Rahmen der vorliegenden Erfindung zu verstehen, dass Reibbeläge mit unterschiedlichem Aufbau, unterschiedlicher Belagsmischung bzw. unterschiedlichen Herstellverfahren für ein und dieselbe Kupplungsscheibe und hier insbesondere auf den gegenüberliegenden Seiten des Belagträgers der Kupplungsscheibe verwendet werden, so also z.B. als Reibbeläge auf Doppelkupplungskupplungsscheiben als linker Belag B8080 (als einem Beispiel eines gewickelten Belags) und als rechter Belag RCF1 (als einem Beispiel eines massengepressten Belags). Dadurch, dass die Kupplungsscheiben für die trockene Doppelkupplungen mit unterschiedlichen Belagsqualitäten (d.h. im Vergleich der rechten Reibseite zur linken Reibseite der Kupplungsscheibe) ausgeführt werden, erhält man einen guten funktionalen Gesamtsystemkompromiss bezüglich Momentenkapazität, Komfort- Verschleiß- und Dauerhaltbarkeitsverhalten. Ein weiterer Zusatznutzen ergibt sich aus dem unterschiedlichen Berstverhalten der Beläge (gewickelt zu massegepresst) speziell bei Überdrehzahlen, welche im Falle von Systemfehlern auftreten können. Hier ergibt sich durch den massegepresstem Belag, welcher bei Überdrehzahl in kleine Bruchstücke zerfällt, eine Art "Sollbruchstelle" was die Systemsicherheit erhöht.

Die unterschiedlichen Reibbeläge auf einer Kupplungsscheibe bei Doppelkupplungen dienen also zur Optimierung der Gesamtsystemeigenschaften bezüglich Komfort, Verschleiß, Dauerhaltbarkeit und Momentenkapazität. Die Anordnung der Beläge kann aber von Projekt zu Projekt verschieden sein, z.B. Kupplung K1 (motorseitige Kupplung bei axial hintereinander angeordneten Reibkupplungen) links B8080 und rechts RCF1 oder Kupplung K1 links RCF1 und rechts B8080. Das Gleiche kann auch für die Kupplung K2 (getriebeseitige Kupplung bei axial hintereinander angeordneten Reibkupplungen) von Vorteil sein, bzw. kann auch von Vorteil sein, wenn nur auf einer Kupplungsscheibe unterschiedliche Beläge zum Einsatz kommen.

Gemäß der Erfindung ist einer der Reibbeläge der Kupplungsscheibe als gewickelter Belag, beispielsweise als LuK B-8080, LuK B-8080 S, LuK B-5088, LuK- B-8805, ausgebildet, und weiterhin ist der auf der gegenüberliegenden Seite des Trägerelementes der gleichen Kupplungsscheibe angeordnete Reibbelag als massengepresster Belag, beispielsweise als LuK RCF-1 ausgebildet.

Weiter können auch gezielt zwei in ihren Eigenschaften unterschiedliche gewickelte oder massengepresste Beläge kombiniert werden. Dies ist vorteilhaft, da die auf beiden Seiten der Zentralplatte einer Doppelkupplung im Betrieb der Doppelkupplung vorherrschenden Temperaturen nicht gleich sind bzw. unter Umstände stärker voneinander abweichen. Werden bei solchen Randbedingungen Beläge eingesetzt, welche nicht die gleiche thermische Abhängigkeit haben (egal ob massengepresst oder gewickelt), sondern auf die vorherrschenden Temperaturen jeweils angepasst sind, ist eine Funktionsfähigkeit der Kupplung deutlich verbessert. Hierdurch können im Gesamtsystem / Fahrzeug auch unterschiedliche Fahreigenschaften bewirkt werden.

Unter dem Begriff "unterschiedliche Belagsqualitäten" wird vorliegend verstanden, dass die verschiedenen Beläge für sich genommen unterschiedliche tribologische Eigenschaften aufweisen, wie Reibwerthöhe, Komfortverhalten (Rupfen), Belagverschleiß bei Energieeintrag, Einlaufverhalten usw.

Unter massengepressten Reibbelägen werden im Regelfall Beläge zusammengefasst, deren Matrix oft kurze Stücke von Fasern (Glasfaserstücke, Aramidfaserstücke, Baumwollfasern, Kokusnussfasern) enthält. Die Länge dieser Fasern beträgt nur Millimeter, maximal wenige Zentimeter, jedenfalls aber liegt die Länge der Faserstücke weit unter der Umfangslänge des Reibbelags. Dieses Material wird in eine Form gegeben und erwärmt, sodass die Matrix fließen kann und Zwischenräume ausgefüllt werden. Hieran können sich weitere Bearbeitungsschritte wie Pressen oder Härten anschließen.

Unter gewickelten Reibbelägen, werden im Regelfall Beläge zusammengefasst, deren Matrix gewickelte Fasern enthält, deren Länge weit über der Umfangslänge des Reibbelags liegt. Die noch nicht gewickelten Fasern sind in der Regel imprägniert und weisen um die Imprägnierung die Matrix auf. Dann werden diese so vorbereiteten Fasern in etwa in Form des Reibbelags gewickelt und erwärmt und gepresst, sodass die Matrix fließt und die Zwischenräume ausfüllt. Dieser Vorpressling wird dann noch weiterbehandelt, z.B. geformt, gehärtet, geschliffen etc.

Wichtiger Bestandteil der Matrix sind in beiden Fällen Harze.

## Patentansprüche

1. Trockene Doppelkupplung mit einer ersten Reibungskupplung und einer zweiten Reibungskupplung, wobei die Reibungskupplungen mit jeweils einer Getriebeeingangswelle verbindbar sind, um Antriebsmoment von zumindest einem Antrieb an die jeweilige Getriebeeingangswelle zu übertragen, wobei die Reibungskupplungen jeweils zumindest eine Kupplungsscheibe mit zumindest zwei Reibbelägen aufweisen, die jeweils auf unterschiedlichen Seiten eines Trägerelementes angeordnet sind, wobei die beiden Reibbeläge zumindest einer der Kupplungsscheiben unterschiedliche Belagsqualitäten aufweisen, **dadurch gekennzeichnet, dass** Harz Bestandteil beider Reibbeläge ist, wobei einer der Reibbeläge der Kupplungsscheibe als gewickelter Belag ausgebildet ist, und wobei der auf der gegenüberliegenden Seite des Trägerelementes der gleichen Kupplungsscheibe angeordnete Reibbelag als massengepresster Belag ausgebildet ist.

## Claims

1. Dry double clutch having a first friction clutch and a second friction clutch, it being possible for the friction clutches to be connected to in each case one transmission input shaft, in order to transmit drive torque from at least one drive to the respective transmission input shaft, the friction clutches having in each case at least one clutch disc with at least two friction linings which are arranged in each case on different sides of a carrier element, the two friction linings of at least one of the clutch discs having different lining qualities, **characterized in that** resin is a constituent part of the two friction linings, one of the friction linings of the clutch disc being configured as a wound lining, the friction lining which is arranged on the opposite side of the carrier element of the same clutch disc being configured as a pressed-mass lining.

## Revendications

1. Double embrayage à sec comprenant un premier embrayage à friction et un deuxième embrayage à friction, les embrayages à friction pouvant être accouplés à chaque fois à un arbre d'entrée de boîte de vitesses, afin de transférer le couple d'entraînement d'au moins un entraînement à l'arbre d'entrée de boîte de vitesses respectif, les embrayages à friction présentant à chaque fois au moins un disque d'embrayage avec au moins deux garnitures de friction qui sont disposées à chaque fois sur des côtés différents d'un élément de support, les deux garnitures de friction d'au moins l'un des disques d'embrayage présentant des qualités de garniture différentes, **caractérisé en ce que**
la résine est un composant des deux garnitures de friction, l'une des garnitures de friction du disque d'embrayage étant réalisée sous forme de garniture enroulée, et la garniture de friction disposée du côté opposé de l'élément de support du même disque d'embrayage étant réalisée sous forme de garniture pressée dans la masse.
